# EUROPEAN PATENT APPLICATION

(11) **EP 2 905 464 A1**
(43) Date of publication of application: **12.08.2015**
(21) Application number: 14154236.5
(22) Date of filing: 07.02.2014
(51) Int. Cl.: F03D 1/06

(54) **Blade root section made of prestressed concrete**

(71) Applicant: Siemens Aktiengesellschaft, 80333 München (DE)
(72) Inventor: Grove-Nielsen, Erik, 7870 Roslev (DK)

(57) **Abstract**

The present invention relates to a root end device (100) for a blade of a wind turbine. The root end device (100) comprises a root end element (101) comprising along a longitudinal extension (102) a first axial end (103) and a second axial end (104) which is arranged opposed to the first axial end (103). The first axial end (103) is coupleable to a hub (130) of the wind turbine and the second axial end (104) is coupleable to a blade section (120) for transferring a compression force between the hub (130) and the blade section (120) via the root end element (101). At least one tension element (105) is arranged at the root end element (101) between the first axial end (103) and the second axial end (104), wherein the tension element (105) comprises a first fixing section (106) and a second fixing section (107) such that the first fixing section (106) is coupleable to the hub (130) of the wind turbine and the second fixing section (107) is coupleable to the blade section (120) for transferring a tension force between the hub (130) and the blade section (120) via the tension element (105).

## Description

### Field of invention

The present invention relates to a root end device for a blade of a wind turbine. Furthermore, the present invention relates to a method for manufacturing a blade for a wind turbine.

### Art Background

Wind turbine blades are mostly fabricated of fibre reinforced composite materials such as glass fibre reinforced epoxy plastic or carbon fibre reinforced epoxy plastic.

Most products are produced in the vacuum assisted resin transfer moulding technique, also named VARTM. A number of e.g. glass fibre fabrics are placed as a stack in a mould. The mould is closed and evacuated to low pressure by means of a vacuum pump. Thereafter a liquid resin is infused into the laminate stack in the mould cavity and left to cure. After cure, the item such as a wind turbine blade can be taken out of the mould and finished.

Blades are usually made in one piece and extra material is placed in the transition areas where web parts end and in areas of a blade root section of the blade where the blade section changes from round shape (cylindrical part) to an airfoil profile. In case of insufficient wetting of glass fibres in the resin injection process, the blade is repaired with hand laid up of new glass fibre material. Furthermore, it is difficult to control resin injections during a resin transfer moulding process of very large and complex wind turbine blades.

In the root end device of the blade, a force transfer between the cylindrical part, the aerodynamic shaped middle section of the blade and the end blade pose a complicated stress pattern, which often leads to cracks and failures and even accidents.

### Summary of the Invention

It may be an object to provide a robust root end device.

This object is solved by a root end device for a blade of a wind turbine, a wind turbine and a method for manufacturing a blade for a wind turbine.

According to a first aspect of the present invention a root end device for a blade of a wind turbine is described. The root end device comprises a root end element comprising along a longitudinal extension a first axial end and a second axial end which is arranged opposed to the first axial end. The first axial end is coupleable to a hub of the wind turbine and the second axial end is coupleable to a blade section for transferring a compression force between the hub and the blade section via the root end element. The root end device further comprises at least one tension element (e.g. a tension rod or a tension cable) which is arranged at the root end element (particularly along the whole length of the blade root element) between the first axial end and the second axial end, wherein the tension element comprises a first fixing section and a second fixing section such that the first fixing section is coupleable to the hub of the wind turbine and the second fixing section is coupleable to the blade section for transferring a tension force between the hub and the blade section via the tension element.

According to a further aspect of the present invention, a wind turbine is presented. The wind turbine comprises a hub and a blade comprising a blade section and an above described root end device. The first axial end of the root end element is coupled to the hub and the second axial end is coupled to the blade section for transferring a compression force between the hub and the blade section via the root end element. The hub is further coupled to the first fixing section of the tension element and the further blade body is further coupled to the second fixing section of the tension element for transferring a tension force between the hub and the blade section via the tension element.

Specifically, the first fixing section and the second fixing section are formed for being coupled to the hub and to the blade section such that the root end element is pretension-able (i.e. prestressed) between the hub and the blade section.

According to a further aspect of the present invention, a method for manufacturing a blade for a wind turbine is described. According to the method, a root end element is provided comprising along a longitudinal extension a first axial end and a second axial end which is arranged opposed to the first axial end. The first axial end is coupled to a hub of the wind turbine and the second axial end is coupled to a blade section such that a compression force is transferable between the hub and the blade section via the root end element. At least one tension element is arranged at the root end element between the first axial end and the second axial end. The tension element comprises a first fixing section and a second fixing section. The first fixing section is coupled to the hub of the wind turbine and is coupled to the second fixing section to the blade section such that a tension force is transferrable between the hub and the blade section via the tension element.

A wind turbine comprises a nacelle which houses a wind turbine generator. A rotating shaft of the wind turbine generator is connected to a rotatable hub at which the blades of the wind turbine are mounted.

The wind force acting on the blades causes further a bending of each blade. The bending and the respective bending moment acting at the root end device of the blade causes a tension at one side of the root end device and a compression at an opposed side of the root end device. This results in a complex stress for the root end device of the blade.

By the approach of the present invention, a blade of a wind turbine comprises the above described root end device which forms a root end section of the blade. The root end device is coupled to a blade section. The blade section comprises for example a mid-part and/or the free end of the blade. Furthermore, the blade section has for example an aerodynamic profile. An aerodynamic profile defines a shape of an aerodynamic body, which is adapted for generating lift, if the air streams along the surface of the aerodynamic body. An aerodynamic profile comprises for example a leading edge (nose part), wherein the air streams against the body, and a trailing edge from which the air streams away from the body.

The root end device is further adapted for being coupled to the hub of the wind turbine. In other words, the root end device forms the transition element between the hub and the (aerodynamically profiled) blade section of the blade.

The root end device according to the present invention comprises the root end element which comprises for example according to an exemplary embodiment of the present invention a tubular hollow shape. The root end element extends along the longitudinal extension which defines a direction particularly from the hub to a tip end of the blade.

The root end element comprises the first axial end and the second axial end. The first axial end, with which the root end element is coupleable to the hub, may comprise a circular cross-section, wherein the cross-section at the second axial end, with which the root end element is coupleable to the blade section, comprises an oval cross-section (i.e. is adapted to the aerodynamic profile of the blade section).

Additionally, the root end device comprises a tension element or a plurality of tension elements, which are arranged and (e.g. slideable) coupled to the root end element. The tension element may be a tension rod or a tension cable. The tension rod is stiffer than the (e.g. flexible) tension cable. At the respective opposite ends of the tension element, the respective tension element comprises first and second fixing sections. The fixing sections are adapted for being coupled and fixed to the hub and to the blade section, respectively. Furthermore, the fixing sections are formed such that the tension element is spatially fixed to the hub and the blade section, respectively, such that a tension force may be transferred between the hub and the blade section. Furthermore, the tension element may pull the blade section in the direction to the hub. Accordingly, the tension elements may press the blade section against the second axial end of the root end element and hence press the root end element against the hub. This results in that the root end element may be prestressed between the hub and the blade section by the fixation of the tension element to the hub and the blade section.

Additionally, this results in that (approx. all) compression force is transferred from the blade section to the hub via the root end element which is clamped between the hub and the blade section. Otherwise, this further results in that (approx. all) tension force is transferred from the blade section to the hub via the at least one tension element which is fixed to the hub by the first fixing section and to the blade section by the second fixing section. Accordingly, in an exemplary embodiment of the present invention, the at least one tension element is coupled to the hub and the blade section such that the root end element is prestressed between the hub and the blade section.

According to a further exemplary embodiment, the first fixing section protrudes along the longitudinal extension from the first axial end and/or wherein the second fixing section protrudes along the longitudinal extension from the second axial end. For example, the hub and/or the blade section, respectively, comprise receiving bores for receiving the respective protruding fixing section of the tension element.

According to a further exemplary embodiment, the first fixing section and/or the second fixing section comprise(s) an external thread or an internal thread. The hub and/or the blade section comprise for example a threaded hole, respectively, such that a bolted connection and fixation between the hub, the tension element and the blade section is generated for transferring tension forces between each other.

Generally, the root end element may be made of a material which comprises a higher compressive strength than the material of the tension element. Furthermore, the material of the root end element may comprise a lower tensile strength than the material of the tension element.

According to a further exemplary embodiment, the root end element is made of a concrete material. For example, the concrete may be concrete M40, specifically Ducorit D4 from the company DensitD or CO2 negative cement from the company Novacem (carbon negative magnesium silicate cement).

According to a further exemplary embodiment, the tension element is made of a steel material or a reinforced plastic material, such as bolt steel (8.8), glass-reinforced plastic (GRP), glass-fiber reinforced plastic (GFRP), Epoxy or glass reinforced epoxy (GRE) or polyurethane material.

In the following table, exemplary compressive and tensile strength values for the above denoted materials for the root end element and the tension element are given:

| Material | Compressive Strength | Tensile Strength | Density |
|---|---|---|---|
| | [MPa] | [MPa] | [g/cm³] |
| Densit Ducorit D4 | 200 | 10 | 2.7 |
| Concrete M40 | 40 | 4 | 2.5 |
| Novacem (CO₂ negative cement) | 40 - 60 | - | - |
| Bolt Steel (8.8) | - | 800 | 7.8 |
| Glassfibre | - | 2200 | 2.6 |
| Epoxy | - | 70 | 1.2 |
| Glass Reinforced Epoxy - GRE (composite) | ∼ 700 | ∼ 1000 | 2.0 |

According to a further exemplary embodiment, the root end element comprises a groove extending between first and second axial end, wherein the tension element is arranged within the groove. The tension element is for example in loose contact or in frictional contact with the root end device inside the groove, such that a relative movement/sliding of the tension element and the root end element is possible.

According to a further exemplary embodiment the (tubular) root end element comprises an inner surface, wherein the groove is formed within the inner surface.

According to a further exemplary embodiment, the root end element comprises an outer surface, wherein the groove is formed within the outer surface.

According to a further exemplary embodiment, the root end element comprises a through hole (i.e. a passage or channel) extending between the first axial end and the second axial end, wherein the tension element is arranged within the trough hole.

For easy removal, the prestressing tension elements can be situated in the longitudinal cavities (groove or through holes) on the outside (outer surface) of the root end element or cavities (groove or through holes) on the inside (inner surface) of the root end element. Hence, the tension elements are detachably arranged within cavities (groove or through holes).

According to a further exemplary embodiment, the root end element comprises a shell extending between the first axial end
and the second axial end. The shell comprises a maintenance opening through which the tension element is accessible.

For removal, the tension elements may be taken out e.g. from the inside root cavity (groove, through hole) through a small hatch (maintenance opening) in the root end element skin (shell). For example, the tension element to be exchanged may be pushed part of the way into the hub and then pulled through the maintenance opening. However, the tension element may also be pulled or pushed out of the cavity (groove, through hole) through the first axial end and the second axial end of the root end element.

According to a further exemplary embodiment, the root end device comprises an aerodynamic element for improving (e.g. deflecting) the air stream streaming along the aerodynamic element, wherein the aerodynamic element is mounted to the root end element. The aerodynamic element may have an aerodynamically profile. Furthermore, the aerodynamic element may be of lightweight material without transferring tension or compression forces between the hub and the blade section.

Summarizing, the blade root element is cast e.g. in high strength concrete (e.g. Densit or Novacem "carbon negative" cement). The high strength concrete has high compressive strength and thus transfers the compression forces that are created by the blade bending moment. As concrete materials have low strength in tension, the tension elements are arranged to run through the entire length of the blade root element. The root end element may comprise approximately 20% to 30% of the overall blade length. As the tension elements may be pre tightened, all tension forces may be taken care of by these tension elements. The concrete body (root end element) may only transfer compression stress.

As each tension element connects the blade hub with the centre blade part (blade section), the root end element only acts as a compressed part between the hub and blade section.

As the tension elements may be longer than approximately 10 metres, for example, the tension elements may be expensive and heavy. Hence, the tension elements may be manufactured as glass fibre reinforced epoxy rods or tubes. At each end of the tension element (or tube) a threaded steel cylinder may be glued onto the (e.g. glass fibre) tension element for forming the first and/or second fixing section. The steel cylinders can have either inside or outside threads.

As described above, the tension elements may be taken out and replaced. The tension element may be placed in a longitudinal cavity (groove) on the outside of the blade root element and may be visible from outside. Alternatively, the tension elements may be placed in a longitudinal cavity (groove) on the inside of the blade root element, wherein a small hatch (maintenance opening) in the blade root shell allows for the tension elements to be taken out. Furthermore, the tension elements may run through through holes in the root end element and are moved to the blade section and passed e.g. through a small hatch maintenance opening) in the shell of the blade root element.

According to the present invention, as the blade root element may be cast in one piece and then prestressed with the tension elements, no internal precast parts are demanding for surface treatment.

The long tension elements have good fatigue characteristics due to the length. The tension element tightening will remain constant over years with very little need to check once prestressed.

No longitudinal web, fibre reinforced shell of the blade section ends in the root area. All tension forces are taken care of by the long tension elements. All compression forces are taken care by the one piece casted concrete part.

As the blade root element may be cast e.g. of concrete in simple moulds no placement of reinforcing fibres is necessary, so that the manufacturing process is reduced in time and costs.

As tension loads follow the longitudinal tension elements all through the root end element, no cracks are foreseen in the transition areas at the trailing edge of the first axial end of the root end element.

The tension element may be a long tension rod or a tension cable being of steel or glass reinforced plastic. The prestressing may be obtained by pulling the tension element via individual steel or even aramid / Kevlar ropes. The ropes may be driven by pulleys or bobbins mounted at the end of the root end element or at the hub and at the other end e.g. in the blade section. Thus, the tension force from the prestressing rope press together the blade section, the root end element and the hub on each side of the root end element.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows schematically a hub, a root end device and a blade section according to an exemplary embodiment of the present invention,
- Fig. 2A to 2C: show schematically the root end device of Fig. 1 according to an exemplary embodiment of the present invention,
- Fig. 3A to 3C: show schematically exemplary embodiments of tension elements according to an exemplary embodiment of the present invention,
- Fig. 4: shows schematically a shell of a root end element comprising grooves at an outer surface according to an exemplary embodiment of the present invention, and
- Fig. 5: shows schematically a shell of a root end element comprising grooves at an inner surface according to an exemplary embodiment of the present invention.

### Detailed Description

The illustration in the drawings is in schematic form. It is noted that in different figures, similar or identical elements are provided with the same reference signs.

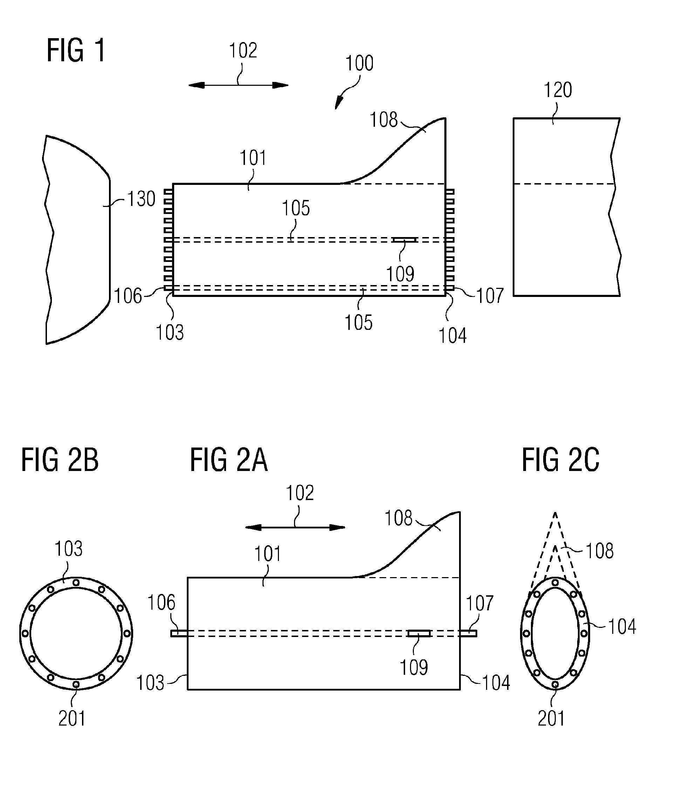

**Fig. 1** shows schematically a hub 130, a root end device 100 and a blade section 120 according to an exemplary embodiment of the present invention. The root end device 100 comprises a root end element 101 comprising along a longitudinal extension 102 a first axial end 103 and a second axial end 104 which is arranged opposed to the first axial end 103. The first axial end 103 is coupleable to a hub 130 of the wind turbine and the second axial end 104 is coupleable to a blade section 120 for transferring a compression force between the hub 130 and the blade section 120 via the root end element 101. At least one tension element 105 (e.g. a tension rod or a tension cable) is arranged at the root end element 101 between the first axial end 103 and the second axial end 104, wherein the tension element 105 comprises a first fixing section 106 and a second fixing section 107 such that the first fixing section 106 is coupleable to the hub 130 of the wind turbine and the second fixing section 107 is coupleable to the blade section 120 for transferring a tension force between the hub 130 and the blade section 120 via the tension element 105.

The wind turbine comprises a nacelle which houses a wind turbine generator. A rotating shaft of the wind turbine generator is connected to the rotatable hub 130 at which the blades of the wind turbine are mounted. The wind force acting on the blades causes a rotation of the hub 130 and of the rotating shaft, respectively. The wind force acting on the blades causes further a bending of each blade. The bending and the respective bending moment acting at the root end device 100 of the blade causes a tension at one side of the root end device 100 and a compression at an opposed side of the root end device 100. This results in a complex stress for the root end device 100 of the blade.

The root end device 100 is coupled to the blade section 120. The blade section 120 comprises for example a mid-part and/or the free end of the blade. Furthermore, the blade section 120 has for example an aerodynamic profile. An aerodynamic profile defines a shape of an aerodynamic body, which is adapted for generating lift, if the air streams along the surface of the aerodynamic body. An aerodynamic profile comprises for example a leading edge (nose part), wherein the air streams against the body, and a trailing edge from which the air streams away from the body.

The root end device 100 is further adapted for being coupled to the hub 130 of the wind turbine. In other words, the root end device 100 forms the transition element between the hub 130 and the (aerodynamically profiled) blade section 120 of the blade.

The root end device 100 comprises the root end element 101 which comprises for example a tubular hollow shape as shown in more detail in Fig. 2. The root end element 101 extends along the longitudinal extension 102 which defines a direction particularly from the hub 130 to a tip end of the blade.

Additionally, the root end device 100 comprises a tension element 105 or a plurality of tension elements 105, which are arranged and (e.g. slideable) coupled to the root end element 101. For sake of clarity, in Fig. 1 only one of the plurality of tension elements 105 is noted with respective reference signs.

The tension element 105 may be a tension rod or a tension cable. The tension rod is stiffer than the (e.g. flexible) tension cable. At the respective opposite ends of the tension element 101 with respect to the longitudinal extension 102, the respective tension element 105 comprises first and second fixing sections 106, 107. The fixing sections 106, 107 are adapted for being coupled and fixed to the hub 130 and to the blade section 120, respectively. Furthermore, the fixing sections 106, 107 are formed such that the tension element 105 is spatially fixed to the hub 130 and the blade section 120, respectively, such that a tension force may be transferred between the hub 130 and the blade section 120. Furthermore, the tension element 105 may pull the blade section 120 in the direction to the hub 130. Accordingly, the tension elements 105 press the blade section 120 against the second axial end 104 of the root end element 101 and hence press the root end element 101 against the hub 120. This results in that the root end element 101 may be prestressed between the hub 130 and the blade section 120 by the fixation of the tension element 105 to the hub 130 and the blade section 120.

This results in that the compression force is transferred from the blade section 120 to the hub 130 via the root end element 101 which is clamped between the hub 130 and the blade section 120. Otherwise, the tension force is transferred from the blade section 120 to the hub 130 via the at least one tension element 105 which is fixed to the hub 130 by the first fixing section 106 and to the blade section 120 by the second fixing section 107.

As shown in Fig.1, the first fixing section 106 protrudes along the longitudinal extension 102 from the first axial end 103 and the second fixing section 107 protrudes along the longitudinal extension 102 from the second axial end 104. For example, the hub 130 and/or the blade section 120, respectively, comprise receiving bores for receiving the respective protruding fixing section 106, 107 of the tension element 105.

The root end element 101 is made of a material which comprises a higher compressive strength with respect to the material of the tension element 105. Furthermore, the material of the root end element 101 may comprise a lower tensile strength than the material of the tension element 105.

For example, the root end element 101 is made of a concrete material. The tension element 105 may be made of a steel material or a reinforced plastic material.

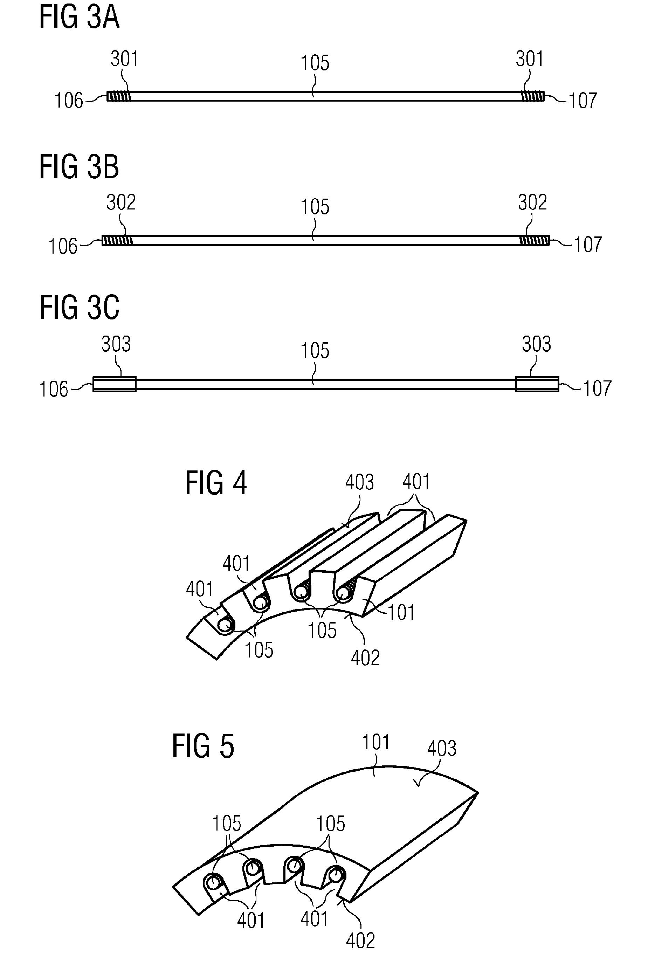

For easy removal, the prestressing tension elements 105 may be situated in longitudinal cavities (groove 401 (see Fig. 4 or Fig. 5) or through holes (see Fig. 2B, Fig. 2C) on the outside (outer surface 403 (see Fig. 4)) of the root end element 101 or cavities on the inside (inner surface 402 (see Fig. 4)) of the root end element 101. Hence, the tension elements 105 are detachably arranged within cavities.

As shown in Fig.1, the root end element 101 comprises a shell extending between the first axial end 103 and the second axial end 104. The shell comprises a maintenance opening 109 through which the tension element 105 is accessible. Furthermore, the shell may comprise a plurality of maintaining openings 109, wherein each maintaining opening 109 is assigned to a respective tension rod 105.

For removal, the tension elements 105 may be taken out e.g. from the inside root cavity through the small hatch (maintenance opening 109) in the root end element skin (shell). For example, the tension element 105 to be exchanged may be pushed part of the way in the direction to the hub 130 and then pulled through the maintenance opening 109.

The root end device 100 comprises an aerodynamic element 108 for improving the air stream , wherein the aerodynamic element 108 is mounted to the root end element 101. The aerodynamic element 108 may have an aerodynamically profile which is adapted to the blade section 120.

**Fig. 2A** to **Fig. 2C** shows schematically the root end device 100 of Fig.1, wherein in Fig. 2B the cross-section of the blade root element 101 at the first axial end 103 is shown and wherein in Fig. 2C a cross-section of the blade root element 101 at the second axial end 104 is shown.

The first axial end 103, with which the root end element 101 is coupleable to the hub 130, comprises a circular cross-section, wherein the cross-section at the second axial end 104, with which the root end element 101 is coupleable to the blade section 120, comprises an oval cross-section (i.e. is adapted to the aerodynamic profile of the blade section 120).

In the exemplary embodiment shown in Fig. 2A to Fig. 2C, the root end element 101 comprises a plurality of through hole 201 (i.e. passages or channels) extending between the first axial end 103 and the second axial end 104, wherein the tension elements 105 are arranged within the trough holes 201.

Furthermore, it is shown that the aerodynamic element 108 forms the trailing edge part at the second axial end 104 of the root end element 101. The aerodynamic element 108 may not be formed of concrete but may be formed of a light weight (for example reinforced plastic) material or may also be of concrete.

**Fig. 3A** to **Fig. 3C** show schematically exemplary embodiments of tension elements 105, such as tension rods. The first fixing section 106 and/or the second fixing section 107 comprise(s) e.g. an external thread or an internal thread. The hub 130 and/or the blade section 120 comprise for example a female thread and a threaded hole, respectively, such that a bolted connection and fixation between the hub 130, the tension element 105 and the blade section 120 is generated for transferring tension forces between each other.

In Fig. 3A, the tension element 105 may be a tension rod, wherein the respective fixing sections 106, 107 of the tension rod comprise a rod external thread 301.

In Fig. 3B, the tension element 105 may be a fibreglass reinforced plastic rod or tube, wherein a threaded element 302, such as a steel element (e.g. a jacket), is fixed (e.g. glued) onto the fixing sections 106, 107.

In Fig. 3C, the tension element 105 may be made of steel or a reinforced plastic material, wherein a bushing 303 with an inside threading or an outside threading is fixed (e.g. glued or welded) onto the fixing sections 106, 107.

**Fig. 4** and **Fig. 5** show a shell of the root end element 101, wherein a groove 401 extending between first and second axial end 103, 104. The tension element 105 is arranged within the groove 401. The tension element 105 is for example in frictional contact or in loose contact with the root end element 100 inside the groove 401, such that a relative movement/sliding of the tension element 105 and the root end element 101 is possible.

In Fig. 4, the root end element 101 comprises an inner surface 402 and an outer surface 403, wherein the groove 401 is formed within the inner surface 402.

In Fig. 5, the groove 401 is formed within the outer surface 403.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Root end device (100) for a blade of a wind turbine, the root end device (100) comprising
a root end element (101) comprising along a longitudinal extension (102) a first axial end (103) and a second axial end (104) which is arranged opposed to the first axial end (103),
wherein the first axial end (103) is coupleable to a hub (130) of the wind turbine and the second axial end (104) is coupleable to a blade section (120) for transferring a compression force between the hub (130) and the blade section (120) via the root end element (101), and
at least one tension element (105) which is arranged at the root end element (101) between the first axial end (103) and the second axial end (104),
wherein the tension element (105) comprises a first fixing section (106) and a second fixing section (107) such that the first fixing section (106) is coupleable to the hub (130) of the wind turbine and the second fixing section (107) is coupleable to the blade section (120) for transferring a tension force between the hub (130) and the blade section (120) via the tension element (105).

2. Root end device (100) according to claim 1,
wherein the first fixing section (106) protrudes along the longitudinal extension (102) from the first axial end (103), and/or
wherein the second fixing section (107) protrudes along the longitudinal extension (102) from the second axial end (104).

3. Root end device (100) according to claim 1 or 2, wherein the first fixing section (106) and/or the second fixing section (107) comprise(s) an external thread or an internal thread.

4. Root end device (100) according to one of the claims 1 to 3,
wherein the root end element (101) is made of a concrete material.

5. Root end device (100) according to one of the claims 1 to 4,
wherein the tension element (105) is made of a steel material or a reinforced plastic material.

6. Root end device (100) according to one of the claims 1 to 5,
wherein the root end element (101) comprises a tubular shape.

7. Root end device (100) according to one of the claims 1 to 6,
wherein the root end element (101) comprises a groove extending between first and second axial end (104), and
wherein the tension element (105) is arranged within the groove.

8. Root end device (100) according to claim 7,
wherein the root end element (101) comprises an inner surface, and
wherein the groove is formed within the inner surface.

9. Root end device (100) according to claim 7,
wherein the root end element (101) comprises an outer surface, and
wherein the groove is formed within the outer surface.

10. Root end device (100) according to one of the claims 1 to 9,
wherein the root end element (101) comprises a through hole (201) extending between the first axial end (103) and the second axial end (104), and
wherein the tension element (105) is arranged within the trough hole.

11. Root end device (100) according to one of the claims 1 to 10,
wherein the root end element (101) comprises a shell extending between the first axial end (103) and the second axial end (104), and
wherein the shell comprises a maintenance opening (109) through which the tension element (105) is accessible.

12. Root end device (100) according to one of the claims 1 to 11, further comprising
an aerodynamic element (108) for improving an air stream,
wherein the aerodynamic element (108) is mounted to the root end element (101).

13. Wind turbine, comprising
a hub (130), and
a blade comprising a blade section (120) and a root end device (100) according to one of the claims 1 to 12,
wherein the first axial end (103) of the root end element (101) is coupled to the hub (130) and the second axial end (104) is coupled to the blade section (120) for transferring a compression force between the hub (130) and the blade section (120) via the root end element (101), and
wherein the hub (130) is further coupled to the first fixing section (106) of the tension element (105) and the further blade body is further coupled to the second fixing section (107) of the tension element (105) for transferring a tension force between the hub (130) and the blade section (120) via the tension element (105).

14. Wind turbine according to claim 13,
wherein the tension element (105) is coupled to the hub (130) and the blade section (120) such that the root end element (101) is prestressed between the hub (130) and the blade section (120).

15. Method for manufacturing a blade for a wind turbine, the method comprising
providing a root end element (101) comprising along a longitudinal extension (102) a first axial end (103) and a second axial end (104) which is arranged opposed to the first axial end (103),
coupling the first axial end (103) to a hub (130) of the wind turbine and coupling the second axial end (104) to a blade section (120) such that a compression force is transferable between the hub (130) and the blade section (120) via the root end element (101),
arranging at least one tension element (105) at the root end element (101) between the first axial end (103) and the second axial end (104),
wherein the tension element (105) comprises a first fixing section (106) and a second fixing section (107), and
coupling the first fixing section (106) to the hub (130) of the wind turbine and coupling the second fixing section (107) to the blade section (120) such that a tension force is transferrable between the hub (130) and the blade section (120) via the tension element (105).
